(19) Europäisches Patentamt
European Patent Office
Office européen des brevets

(11) **EP 2 159 204 A1**

(12) **DEMANDE DE BREVET EUROPEEN**

(43) Date de publication:
**03.03.2010 Bulletin 2010/09**

(51) Int Cl.:
*C04B 28/16* (2006.01)    *B28B 1/16* (2006.01)
*E04C 2/288* (2006.01)    *C04B 41/65* (2006.01)

(21) Numéro de dépôt: **08162910.7**

(22) Date de dépôt: **25.08.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(71) Demandeur: **Gypsmix SARL**
**1211 Geneve (CH)**

(72) Inventeurs:
• **Tessier, Christophe**
**06140 Vence (FR)**

• **Bagot, Rodolphe**
**13750 Plan d'Orgon (FR)**
• **Ruas, Patrick**
**13200 Arles (FR)**

(74) Mandataire: **Roman, Alexis**
**Cabinet Roman**
**35, rue Paradis**
**B.P. 2224**
**F-13207 Marseille Cedex 01 (FR)**

(54) **Procédé de fabrication d'un élément de construction ayant au moins une face résistante au feu.**

(57)    La présente invention a pour objet un porocédé de fabrication d'un élément de construction ayant au moins une face résistante au feu, se caractérisant par le fait que ledit élément de construction est obtenu en disposant dans un moule (3) :
• une couche (1) d'un matériau autolissant fluide ayant des propriétés d'adhérence et des propriétés anti-feu, ledit matériau étant apte à faire prise et durcir,
• une couche (2) d'un matériau de construction fluide ou pâteux, de type mortier ou béton,

et par le fait que la couche (1) ayant des propriétés anti-feu forme la face résistante au feu dudit élément de construction.

La protection au feu peut ainsi être réalisée au moment de la fabrication de l'élément de construction, directement en usine et cette protection incendie est transportée et installée en même temps que la structure.

Fig.1B

Printed by Jouve, 75001 PARIS (FR)

EP 2 159 204 A1

**Description**

<u>Domaine technique de l'invention.</u>

La présente invention a pour objet un procédé de fabrication d'un élément de construction ayant au moins une face résistante au feu.

Elle a également pour objet un élément de construction résistant au feu de type dalle, dalle alvéolaire, prédalle ou poutre-dalle en béton obtenu par ce procédé.

L'invention concerne le domaine technique général des éléments de construction de type mortier ou béton utilisés notamment dans les structures de bâtiments ou de tunnels et plus généralement tous les éléments de construction préfabriqués en béton ou mortier.

<u>État de la technique.</u>

Les éléments de construction jouent un rôle important dans le développement d'un incendie. Certains peuvent contribuer de manière importante au développement du feu ou ne pas conserver leur fonctionnalité pendant l'incendie (perte de la capacité portante, perte de l'isolation, ...) alors que d'autres sont spécialement conçus pour lui être résistant.

Pour la protection contre le feu, il est courant d'employer des éléments de construction comportant sur au moins une de leur face une couche d'un matériau de protection au feu, par exemple de type laine de roche, amiante, gypse, panneau de plâtre, panneau en silicate de calcium, peinture intumescente, enduit projeté de type FENDOLITE® (mélange de vermiculite et de ciment Portland), FIREBARRIER® (ciment réfractaire), etc.

Les matériaux résistants au feu sont des matériaux pouvant résister à de hautes températures (> 1000°C) tout en assurant, pendant un temps déterminé, le maintien de la fonctionnalité des matériaux ou systèmes constructifs protégés.

Généralement, la couche de matériau de protection au feu est mise en place sur site, c'est-à-dire une fois que les éléments de construction ont été montés. Le matériau de protection au feu peut être un enduit appliqué par projection en voie humide (cas du FENDOLITE® et du FIREBARRIER® par exemple), une peinture intumescente pulvérisée (NULLIFIRE® par exemple) ou un panneau mis en place par fixation mécanique (cas des panneaux de plâtre STUCAL®, silico-calcaire PROMATECT® ou laine de roche par exemple).

Plusieurs inconvénients apparaissent lors de la mise en place sur site de la couche de protection au feu. Tout d'abord, certaines parties de la structure à protéger peuvent être difficilement accessibles de sorte que la protection ne peut être optimale sur toute la surface à protéger. Dans le cas de la fixation mécanique de panneaux résistant au feu, il est nécessaire de découper lesdits panneaux en fonction de la forme et des dimensions de la structure à protéger. Et selon la précision de la découpe, il peut y avoir certaines parties de la structure mal protégées. La question du traitement des joints (rectitude, désaffleurement) se pose également, renforçant, dans la pratique, les problèmes pour assurer une protection continue des éléments. De plus, le fait de rapporter des éléments de protection sur une structure déjà montée est coûteux en temps et en main d'oeuvre, implique un travail en sous-face de l'ouvrage contre-productif et incohérent par rapport à la conception globale et engendre d'importantes salissures nécessitant un nettoyage. Un autre inconvénient réside dans le fait qu'il est nécessaire de prévoir une gestion des déchets.

Pour tenter de résoudre le problème lié à la mise en place d'éléments de protection rapportés sur une structure déjà montée, il est connu d'introduire une couche de matériau de protection au feu, directement en usine, lors de la fabrication des éléments de construction. Dans ce cas, on place un panneau de protection au feu en fond de coffrage et on vient couler par-dessus une couche d'un matériau de construction de type mortier ou béton. Après démoulage, on obtient un élément de construction stratifié comportant une couche de protection au feu. Toutefois, il est encore nécessaire de prédécouper le panneau avant son installation et d'ajuster ses dimensions à celles de l'ouvrage ou du moule en usine. Cette opération est habituellement coûteuse en temps et en main d'oeuvre et nécessite une gestion des déchets de coupe.

Face aux inconvénients de l'art antérieur, le problème technique principal que vise à résoudre l'invention est de fabriquer en usine un élément de construction ayant au moins une face résistante au feu, de manière simple, rapide, économique en énergie, main-d'oeuvre et process.

Un autre but de l'invention est de proposer un procédé de fabrication d'un élément de construction qui ne nécessite pas de gestion des déchets.

Un autre but de l'invention est de proposer un élément de construction dont la couche de protection au feu possède de très bonnes propriétés isolantes et mécaniques pour les hautes (>1000°C) et les très hautes températures (>1300°C).

Divulgation de l'invention.

La solution proposée par l'invention est un procédé de fabrication d'un élément de construction ayant au moins une face résistante au feu, remarquable en ce que ledit élément de construction est obtenu en disposant dans un moule :

- une couche d'un matériau autolissant fluide ayant des propriétés d'adhérence et des propriétés anti-feu, ledit matériau étant apte à faire prise et durcir,
- une couche d'un matériau de construction fluide ou pâteux, de type mortier ou béton,

et en ce que la couche ayant des propriétés anti-feu forme la face résistante au feu dudit élément de construction.

Ce procédé permet d'obtenir de manière simple et rapide, une couche de protection au feu épousant parfaitement la forme du moule sans intervention extérieure et sans génération de déchet. Ainsi, la protection au feu est réalisée au moment de la fabrication de l'élément de construction, directement en usine et cette protection incendie est transportée et installée en même temps que la structure.

On connaît par le document US 6.230.409 (BILLINGS et al), un procédé de fabrication d'un élément de construction dans lequel la couche résistante au feu n'est pas constituée d'un matériau autolissant fluide. De plus, en se rapportant aux figures 7 et 11 de ce document, cette couche résistante au feu ne forme pas une face de l'élément de construction puisqu'elle est située entre deux autres couches. Et en tout état de cause, aucune des faces de l'élément de construction n'est résistante au feu.

Selon une caractéristique préférée de l'invention, l'élément de construction est obtenu en disposant d'abord au fond du moule la couche de protection au feu, puis en disposant sur ladite couche de protection au feu suffisamment durcie la couche du matériau de construction. Dans une variante de réalisation permettant d'élargir le champ d'application de l'invention, on dispose d'abord au fond du moule la couche du matériau de construction, puis on dispose sur ladite couche du matériau de construction suffisamment durcie la couche de protection au feu.

Selon une autre caractéristique avantageuse de l'invention, on forme le matériau constitutif de la couche de protection au feu en mélangeant une composition granuleuse comprenant un liant hydraulique à base d'anhydrite III et un granulat susceptible de libérer de l'alumine, avec de l'eau, ledit liant hydraulique et ledit granulat étant dosés pour former, à partir de 1000°C, une peau extérieure à base de sulfo-aluminate de calcium.

Par « granulat susceptible de libérer de l'alumine », on entend au sens de la présente invention, un granulat à base d'alumine ou un granulat, tel que la vermiculite, apte à libérer de l'alumine lorsqu'il est chauffé.

Selon encore une autre caractéristique avantageuse de l'invention permettant d'améliorer les propriétés anti-feu, mécaniques et notamment l'adhérence sur tout type de support, on dose le liant hydraulique à base d'anhydrite III et le granulat susceptible de libérer de l'alumine pour faire réagir de 3 à 5 moles, préférentiellement 4 moles, d'anhydrite III avec 2 à 4 moles, préférentiellement 3 moles, d'alumine.

Selon une autre caractéristique avantageuse de l'invention, on utilise un granulat choisi dans la liste des granulats suivants pris seuls ou en combinaison : bauxite calcinée, alumine tabulaire, alumine calcinée, argile réfractaire calcinée, chamotte réfractaire, perlite, vermiculite, disthène, bentonite, magnésite, dolomite, laitier, corindons blanc ou brun, kerphalite, hydroxyde d'aluminium, amiante recyclée, ciment fondu alumineux, spinelle d'alumine magnésie. Lorsque la couche de protection au feu conforme à l'invention est soumise à des hautes températures ($\geq$ 1000°C), on utilisera avantageusement de la vermiculite.

Dans une variante de réalisation, on forme le matériau constitutif de la couche de protection au feu en mélangeant un plâtre et/ou un ciment Portland et/ou un ciment alumineux à de la vermiculite et/ou de la perlite et de l'eau.

Un autre aspect de l'invention concerne un élément de construction obtenu par le procédé conforme aux caractéristiques précédentes et comportant :

- une couche d'un matériau formé par le mélange d'une composition granuleuse comprenant un liant hydraulique à base d'anhydrite III et un granulat susceptible de libérer de l'alumine, avec de l'eau, ledit liant hydraulique à base d'anhydrite III et ledit granulat étant dosés pour former, à partir de 1000°C, une peau extérieure à base de sulfo-aluminate de calcium,
- une couche d'un matériau de construction de type mortier ou béton.

Cet élément de construction présente des propriétés de protection au feu tout à fait remarquables. Il peut être rapidement et facilement fabriqué en usine sans déchet et peut être transporté directement sur site sans contrainte particulière.

Description des figures.

D'autres caractéristiques et avantages de la présente invention ressortiront mieux à la lecture de la description et des exemples qui vont suivre, faits à titre d'exemples indicatifs et non limitatifs, en regard des dessins annexés sur lesquels :

- les figures 1A à 1C représentent les différentes étapes du procédé objet de l'invention,
- les figures 2A à 2C représentent les différentes étapes d'une variante de réalisation du procédé objet de l'invention.

Modes de réalisation de l'invention.

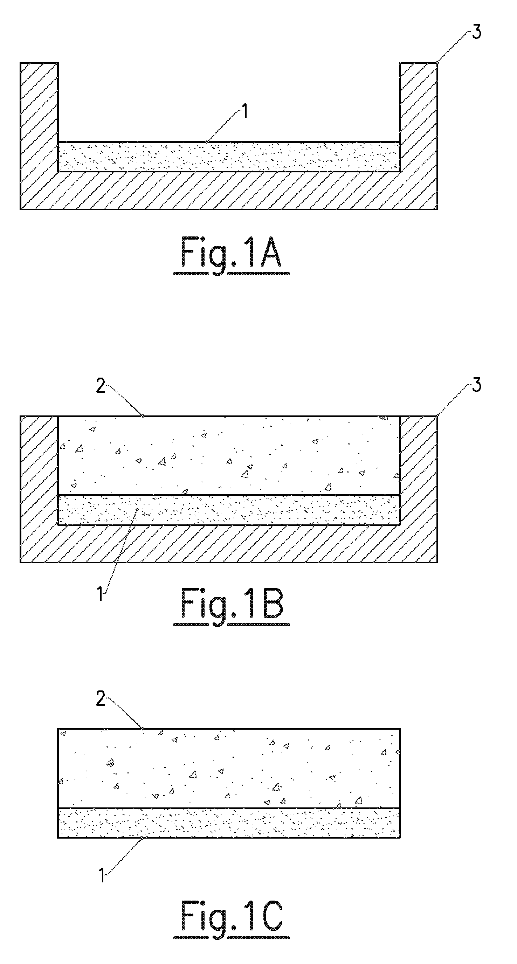

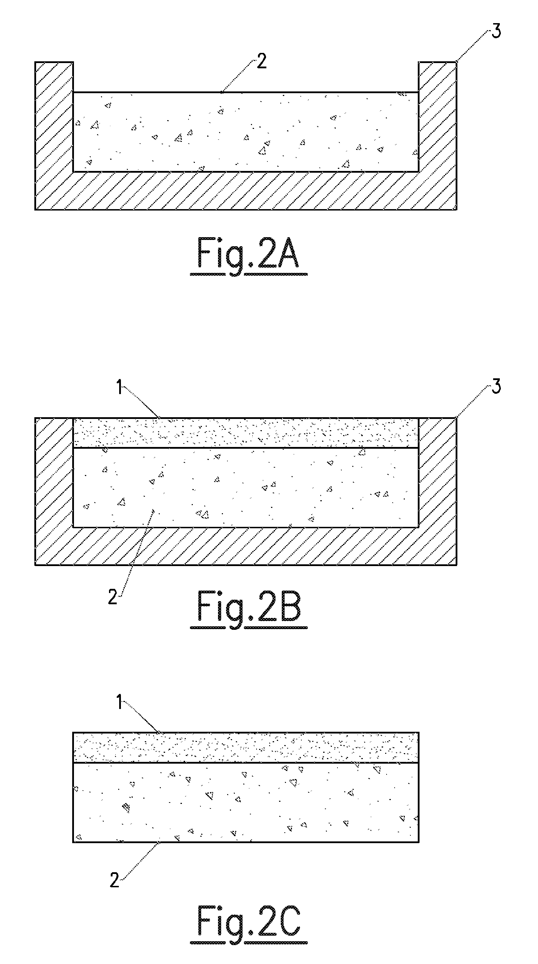

Conformément aux figures 1c et 2c, l'élément de construction conforme à l'invention comporte :

- une couche 1 d'un matériau autolissant fluide ayant des propriétés d'adhérence et des propriétés anti-feu.
- une couche 2 d'un matériau de construction de type mortier ou béton.

L'utilisation d'un matériau autolissant permet d'intégrer ce dernier dans un procédé de fabrication par moulage ou coulage. Un tel matériau autolissant peut par exemple être formé par un plâtre et/ou un ciment Portland et/ou un ciment alumineux mélangé à de la vermiculite et/ou de la perlite.

Toutefois, selon un mode préféré de réalisation, on utilise un matériau formé par le mélange d'une composition granuleuse comprenant un liant hydraulique à base d'anhydrite III et un granulat susceptible de libérer de l'alumine, avec de l'eau. Une telle composition est par exemple décrite dans la demande de brevet WO 2007/000500 au nom de la demanderesse.

Selon un mode préféré de fabrication, on utilise un liant hydraulique à base d'anhydrite III préparé en :

a) chauffant une composition pulvérulente à base de sulfate de calcium pour former de l'anhydrite III soluble métastable,

b) appliquant une contrainte mécanique sur les particules d'anhydrite III soluble métastable de manière à stabiliser leur phase métastable.

Ce procédé permet de stabiliser les particules de sulfate de calcium en phases anhydrite III soluble métastable par une contrainte mécanique. Le liant hydraulique obtenu par ce procédé a une bonne tenue à l'humidité et sa réhydratation dans l'air est ralentie. De plus, par rapport aux autres liants hydrauliques connus de l'homme du métier, les résistances au feu sont améliorées en mélangeant un tel liant hydraulique avec un granulat susceptible de libérer de l'alumine.

Il est possible de microniser les particules d'anhydrite III de gros diamètre avant de les contraindre mécaniquement. Pour ce faire, on chauffe la composition pulvérulente à base de sulfate de calcium de manière à vaporiser les molécules d'$H_2O$ contenues dans les particules de sulfate de calcium et provoquer l'éclatement de ces dernières. Et préférentiellement, on chauffe la composition pulvérulente à base de sulfate de calcium par un procédé flash à une température comprise entre 400°C et 700°C et dans une atmosphère saturée en vapeur d'eau.

On réalise de manière préférée les étapes a) et b) simultanément en injectant la composition pulvérulente à base de sulfate de calcium dans un flux d'air chaud saturé en vapeur d'eau et ayant une température comprise entre 400°C et 700°C, ledit flux d'air chaud traversant un conduit d'impactage configuré de manière à ce que les particules d'anhydrite III formées impactent ses parois lors de leur déplacement. Le conduit d'impactage est avantageusement de forme sensiblement toroïdale de manière à ce qu'à chaque changement de direction, les particules impactent les parois. Le conduit d'impactage peut être parfaitement toroïdale ou comporter des portions droites avant les changements de direction. Toutefois, le conduit d'impactage peut avoir une autre configuration permettant aux particules d'impacter sur les parois, par exemple, des conduits en forme de 'L' ou de 'U'. En pratique, on préfère utiliser un turbo-sécheur RINA-JET® fabriqué par la société RIERA NADEU SA.

L'application de la contrainte mécanique est préférentiellement réalisée en impactant les particules d'anhydrite III soluble métastable (et/ou d'anhydrite II et/ou d'hémihydrate β de sulfate de calcium) contre une paroi. Toutefois, d'autres procédés équivalents permettant d'appliquer une contrainte mécanique peuvent être employés. On peut par exemple utiliser un dispositif à piston aménagé de manière à appliquer une force mécanique sur les particules, ces dernières étant écrasées par ledit piston. L'application de cette contrainte mécanique permet en outre d'associer la phase anhydrite III aux phases anhydrite II et/ou hémihydrate β de sulfate de calcium pour former un nouveau type de liant hydraulique. On peut d'ailleurs prévoir d'appliquer une contrainte mécanique directement sur un mélange contenant de l'anhydrite III soluble stabilisé (par exemple du Gypcement®) de l'anhydrite II et/ou de l'hémihydrate β de sulfate de calcium pour obtenir un liant hydraulique comportant des particules dont la structure cristalline comprend des phases anhydrite III soluble associées à des phases anhydrite II. Les particules sont projetées à une vitesse comprise entre 5 m/s et 30 m/s contre la paroi, la vitesse amenant à la stabilisation dépendant de la taille et de la nature des particules à stabiliser. La synthèse des particules d'anhydrite III (et/ou d'anhydrite II et/ou d'hémihydrate β de sulfate de calcium) par une action commune des chocs thermiques à très haute température et des chocs mécaniques à très haute vitesse assure la cohésion du liant hydraulique. En impactant sur les parois, les particules d'anhydrite III (et/ou d'anhydrite II et/ou d'hémihydrate β de sulfate de calcium) vont non seulement se stabiliser, mais également s'éclater, ce qui permet de microniser lesdites particules et de réduire la granulométrie entre 5 $\mu$m et 50 $\mu$m.

Si, au niveau du dispositif de chauffage, les paramètres de calcination sont réglés pour former uniquement des particules d'anhydrite III soluble métastable (éventuellement envelopper d'une couche d'anhydrite II), un dispositif d'introduction d'anhydrite II et/ou d'hémihydrate β de sulfate de calcium peut être agencé après, ou avantageusement avant, le premier conduit d'impactage.

L'analyse chimique sous forme d'oxydes des granulats employés indique la présence d'alumine $Al_2O_3$ (oxyde d'aluminium), préférentiellement sans trace d'eau. Toutefois, ils ne contiennent jamais 100 % $Al_2O_3$ et comportent généralement des impuretés.

Le tableau 1 qui suit regroupe différents granulats que l'on peut employer seuls ou en combinaison dans la composition objet de l'invention selon l'application du matériau résistant au feu.

Tableau 1 : différents granulats susceptibles de libérer de l'alumine.

| Granulat | % $Al_2O_3$ (p/p$_{granulat}$) | Application |
|---|---|---|
| Bauxite calcinée | 90 | toute température |
| Argile réfractaire calcinée | 40 | Basse température |
| Alumine calcinée | 99.5 | Haute température |
| Alumine tabulaire | 99.5 | Haute température |
| Chamotte réfractaire | 42 | Basse température |
| Perlite | 13 | Basse température |
| Vermiculite | <50 | Haute température |
| bentonite | <50 | Basse température |
| Magnésite | >50 | Haute température |
| Dolomite | 63 | Haute température |
| Laitier | 14 | Basse température |
| Corindon blanc ou brun | Forte teneur | Haute température |
| Kerphalite | 60 | Haute température |
| Spinelle d'alumine magnésie | 66 | Très haute température |
| hydrate d'alumine | 65 | Haute température |
| Amiante recyclé | 4 | Basse température |
| ciment fondu alumineux | >50 | Haute température |

La demanderesse a constaté que plus la proportion d'alumine est grande, plus les propriétés de protection au feu sont élevées. Les caractéristiques des granulats employés dépendent donc de l'application du matériau et des propriétés de protection au feu recherchées, selon qu'il est utilisé pour les hautes (>1000°C) ou les très hautes températures (>1600°C). On utilisera préférentiellement de la vermiculite pour les températures supérieures à 1000°C et du spinelle d'alumine magnésie pour de très hautes températures supérieures ou égales à 1600°C.

Selon un mode avantageux de réalisation, on utilise entre 50 % et 80 % p/p$_{composition}$ de liant hydraulique à base d'anhydrite III et entre 5 % et 30 % p/p$_{composition}$ de granulat susceptible de libérer de l'alumine.

Le liant hydraulique à base d'anhydrite III et le granulat sont avantageusement dosés pour faire réagir environ 3 à environ 5 moles d'anhydrite III avec environ 2 à environ 4 moles d'alumine et préférentiellement pour faire réagir environ 4 moles d'anhydrite III avec environ 3 moles d'alumine et former, à partir de 1100°C, une peau extérieure à base de sulfo-aluminate de calcium, comme décrit plus loin dans la présente description. En pratique, le matériau constitutif de la couche 1 de protection au feu est celui revendiqué dans la demande de brevet WO 2007/000500 au nom de la demanderesse.

Le liant hydraulique étant majoritaire dans la composition granuleuse, on peut régler la densité du matériau constitutif de la couche 1 de protection au feu en jouant sur le choix de densité des granulats susceptible de libérer de l'alumine. En augmentant la densité et/ou la proportion des granulats, on augmente notamment la résistance mécanique, la tenue au feu, la résistance à l'abrasion et à la corrosion du matériau. En abaissant la densité et/ou la proportion des granulats, on augmente notamment la porosité, les propriétés isolantes et la résistance aux chocs thermiques du matériau.

Pour fabriquer la composition granuleuse, on utilise avantageusement un liant hydraulique à base d'anhydrite III stabilisée, par exemple un liant hydraulique fabriqué selon le procédé décrit précédemment. On peut également employer un liant hydraulique à base d'anhydrite III stabilisée et d'anhydrite II avec avantageusement une proportion d'anhydrite III supérieure à la proportion d'anhydrite II.

On malaxe à sec entre 50 % et 80 % p/p$_{composition}$ de liant hydraulique à base d'anhydrite III stabilisée et éventuellement d'anhydrite II avec entre 5 % et 30 % p/p$_{composition}$ de granulat susceptible de libérer de l'alumine, jusqu'à obtenir une composition granuleuse homogène.

Préférentiellement, on utilise une composition comportant : 63% p/pcomposition de liant hydraulique à base d'anhydrite III obtenu par le mode préfère de fabrication décrit ci-dessus ; 27% p/pcomposition de ciment Portland (en pratique de 15% et 50%) ; 10 % p/pcomposition de vermiculite exfoliée en tant que granulat susceptible de libérer de l'alumine; 1,5% p/pliant de fluidifiant (on pourra par exemple utilisé un polycarboxylate de type REOMIX GT 205®, ou tout autre fluidifiant convenant à l'homme du métier) ; éventuellement 0,016% p/pliant d'agent épaississant (par exemple de type polysaccharide modifié naturel ou de synthèse tel que XANTHANE®, COLLAXIM-P2®, ou préférentiellement OPAGEL-FP6®). En effet, la demanderesse a mis en évidence que cette composition présente les meilleures propriétés de résistance au feu, mécaniques et notamment l'adhérence sur tout type de support.

La composition ainsi préparée doit être conservée dans un endroit plutôt sec, sans autre contrainte particulière du fait de la stabilité de l'anhydrite III.

On utilise la composition granuleuse décrite ci-dessus en la malaxant avec de l'eau pour former un mélange pâteux. Le malaxage peut être réalisé dans une bétonnière ou par l'intermédiaire de tout autre dispositif équivalent convenant à l'homme du métier.

La proportion d'eau mélangée avec la composition granuleuse est avantageusement comprise entre 40 % et 80 % p/p$_{liant}$. Il faut environ 19 % p/p$_{liant}$ d'eau pour réhydrater l'anhydrite III. La quantité d'eau supplémentaire va, en s'évaporant, former des vides et donc rendre le matériau plus ou moins poreux et plus ou moins dense. En augmentant la porosité, on augmente la résistance aux chocs thermiques et on diminue la conductivité thermique, l'air occlus jouant le rôle d'isolant. En abaissant la porosité du matériau, on augmente la résistance mécanique, la résistance à l'abrasion et à la corrosion. On utilisera préférentiellement un matériau poreux dans des applications où les propriétés isolantes sont nécessaires. Avec environ 80 % p/p$_{liant}$ d'eau, le mélange pâteux, plus fluide, est avantageusement mis en forme par coulage.

Selon les granulats employés et la proportion d'eau utilisé pour la préparation du mélange pâteux, la résistance mécanique à la compression varie de 5 à 40 MPa à 28 jours (selon la norme NF EN 196.1) et la résistance mécanique à la flexion varie de 1 à 10 MPa à 28 jours (selon la norme NF EN 196.1).

L'anhydrite III se réhydrate en gypse, mais avec une structure cristalline différente de celle du gypse naturel, conférant au matériau obtenu des caractéristiques mécaniques et d'adhérence sur tout support tout à fait remarquables. La forme cristalline obtenue se présente sous la forme de bâtonnets se déposant les uns sur les autres. Le matériau obtenu après séchage présente donc une forte cohésion cristalline.

Le mélange pâteux obtenu lors du mélange de la composition granuleuse avec de l'eau est autolissant, c'est-à-dire qu'il est apte à se répartir tout seul au fond d'un moule. De plus, il présente une bonne homogénéité, avec une ségrégation limitée des particules. La demanderesse a également pu constater qu'aucun retrait ni gonflement de matière n'apparaissait lors de la prise. Ces caractéristiques rendent particulièrement avantageuse l'utilisation de ce mélange dans la réalisation d'éléments de construction obtenus par moulage ou coulage.

Le mélange pâteux fait prise de 10 minutes à 3 heures, selon la quantité d'eau mélangée et l'adjuvantation. Idéalement, le temps de prise est d'environ 15 minutes de manière à pouvoir intégrer le procédé de fabrication objet de l'invention dans la plupart des process de préfabrication sans pénaliser les cycles de production. Des retardateurs de prise, de type acide citrique ou l'un de ses dérivés, acide tartrique, ou d'autres retardateurs bien connus de l'homme du métier, peuvent être également employés. Toutefois, pour accélérer le procédé de fabrication de l'élément de construction, on peut utiliser des activateurs de prise, du type agents basiques alcalins, de préférence de la chaux éteinte, de la chaux grasse, de la soude, des silicates alcalins, préférentiellement des méta-silicates de soudes ou de lithium. La mise en place de la seconde couche sur la première couche peut ainsi être effectuée rapidement. Les activateurs ou les retardateurs de prise sont mélangés à la composition granuleuse au moment de sa fabrication ou au moment de la préparation du mélange pâteux, dans des proportions comprises entre 0.1% à 2% p/pcomposition.

Lorsque la couche de protection au feu obtenue après séchage du mélange pâteux est soumis à des températures inférieures à 1000°C, les propriétés anti-feu du gypse issu de l'anhydrite III et du granulat susceptible de libérer de l'alumine suffisent pour résister au feu. La porosité et la densité du matériau permettent de faire varier les propriétés anti-feu et mécaniques comme expliqué précédemment. À environ 1000°C, un gradient de phases apparaît dans la structure du matériau, l'anhydrite III réhydraté et l'alumine réagissant pour former une peau extérieure à base de sulfo-aluminate de calcium selon la réaction :

$$4(CaSO_4, 2H_2O) + 3(Al_2O_3) \rightarrow (CaO)_4(Al_2O_3)_3SO_3 + \text{aluminate de calcium (à ~1100°C)}$$

On n'obtient jamais 100 % de $(CaO)_4(Al_2O_3)_3SO_3$ du fait que le liant hydraulique à base d'anhydrite III et les granulats susceptibles de libérer de l'alumine comportent des impuretés. Il en est de même si les composés ne sont pas mélangés dans des proportions stoechiométriques. Le sulfo-aluminate de calcium va se former uniquement sur une faible épaisseur de l'ordre de quelques millimètres au niveau de la surface de la couche de protection au feu en contact avec la source de chaleur, pour créer un bouclier thermique.

Ce procédé particulier permet d'obtenir une couche de protection résistant au feu de manière passive. En effet, la formation du sulfo-aluminate de calcium se fait au moment où la couche de protection au feu est en contact avec la chaleur et non avant, aucune autre énergie que celle émise par la source de chaleur n'étant nécessaire.

La demanderesse a mis en évidence de manière surprenante que le sulfo-aluminate de calcium formé conformément à l'invention agit comme un puissant bouclier thermique, la couche de protection obtenue n'absorbant que très faiblement l'énergie thermique émise par la source de chaleur. La demanderesse a également mis en évidence que le pouvoir réfléchissant de la couche de sulfo-aluminate de calcium formée était amélioré en utilisant un liant hydraulique à base d'anhydrite III et d'anhydrite II, les propriétés réfléchissantes étant maximales lorsque la proportion d'anhydrite III est supérieure à celle d'anhydrite II.

Le procédé objet de l'invention va maintenant être décrit plus en détail. Le matériau auto-lissant fluide ayant des propriétés d'adhérence et des propriétés anti-feu est mis en oeuvre par gâchage d'une manière connue de l'homme du métier de façon à obtenir un mélange pâteux.

En se rapportant à la figure 1A, ce mélange pâteux est disposé au fond du moule 3 à la main, par coulage, par coulée vibrée, par injection, par extrusion, par stratification, par extension, par pressage, ou tout autre technique convenant à l'homme du métier, de manière à former une première couche 1 de protection au feu.

Lorsque l'élément de construction à réaliser est du type dalle alvéolée, le moule 3 est avantageusement un moule ouvert de longueur importante (généralement entre 50 m et 200 m), dont la section correspond à celle souhaitée pour l'élément de construction (en pratique, 1.20 m de large et la hauteur est fonction de l'usage). Dans le cas de dalles ou pré-dalles, les moules sont fermés et on moule élément par élément. Toutefois, tout autre moule convenant à l'homme du métier peut être utilisé lors de la mise en oeuvre du procédé. L'épaisseur de la couche 1 de protection au feu varie de 5 mm à 50 mm selon les contraintes thermiques auxquelles la structure doit résister. En pratique, une épaisseur de 10 mm garantit une protection au feu satisfaisante pour au moins 120 minutes de protection sur une épaisseur de dalle de béton de typiquement 15 cm .

D'une manière connue de l'homme du métier, une pellicule de décoffrant (huile de démoulage, cire, émulsion, ...) sera avantageusement disposée au fond du moule de manière à faciliter le démoulage ultérieur.

On laisse ensuite la première couche 1 de protection au feu faire prise et durcir suffisamment (environ 15 minutes) pour qu'une seconde couche 2 d'un matériau de construction de type mortier ou béton puisse être « coulée » dessus (figure 1 B). Du fait de sa bonne stabilité dimensionnelle, la première couche 1 de protection au feu reste parfaitement en position dans le moule 3 lors de la phase de cinétique de prise.

L'adhérence de la première couche 1 de protection au feu sur la seconde couche 2 du matériau de construction est du type adhérence cristalline. En effet, un réseau cristallin formant adhérence se développe au niveau de l'interface desdites couches. Pour optimiser l'adhérence de la première couche 1 de protection au feu sur la seconde couche 2 du matériau de construction, il est préférable, mais non nécessaire, que ladite première couche reste légèrement humide lors de la mise en place de ladite seconde couche. Si la première couche 1 de protection au feu n'est pas assez humide, une pellicule d'eau est avantageusement disposée sur ladite première couche. Cette pellicule d'eau évite que la première couche 1 de protection au feu ne vienne capter l'eau contenue dans la seconde couche 2 du matériau de construction et permet la formation d'une laitance en surface particulièrement avantageuse pour optimiser l'adhérence de ladite première couche sur ladite seconde couche. Il est également possible de prévoir que le matériau constitutif de la seconde couche 2 présente un léger excédent d'eau.

L'épaisseur de la seconde couche 2 du matériau de construction varie en fonction de l'utilisation de l'élément de construction. Elle peut varier de 10 mm à 50 cm.

La seconde couche 2 du matériau de construction est disposée dans le moule 3, sur la première couche 1 de protection au feu, par coulage, par coulée vibrée, par injection, par extrusion, par stratification, par extension, par pressage, etc. Dans le cas de la fabrication de dalles alvéolées, la couche 2 du matériau de construction est mise en oeuvre par extrusion d'un béton ou d'un mortier. Elle peut ainsi être facilement coulée en continu sur toute la longueur du moule 3 à l'aide d'une extrudeuse. Cette technique est bien connue de l'homme du métier.

Dans le cas de la fabrication d'un élément de construction précontraint, après avoir disposé la première couche 1 de protection au feu au fond du moule 3 et une fois que ladite première couche est suffisamment durcie, on dispose des câbles précontraints sur le dessus de ladite première couche puis on « coule » la seconde couche 2 du matériau de construction.

L'élément de construction obtenu peut être amené à fléchir au démoulage ou, dans le cas d'éléments précontraints, lorsque les câbles de précontraintes sont sectionnés. Il est donc particulièrement avantageux que la première couche 1 de protection au feu continue à adhérer à la seconde couche 2 du matériau de construction et puisse suivre les déformations de l'élément de construction. Du fait que le matériau de la première couche 1 de protection au feu présente un module d'élasticité relativement bas par rapport au module d'élasticité du matériau de construction de la seconde couche 2, ladite première couche est apte à suivre les déformations de ladite seconde couche, sans aucune séparation des matières.

En se rapportant à la figure 1C, une fois que les couches 1 et 2 sont suffisamment durcies, il suffit de démouler l'ensemble pour obtenir un élément de construction comportant une couche d'un matériau de protection au feu dont la surface résistante au feu est lisse, ne nécessitant pas de finition. Selon les dimensions initiales du moule 3, l'élément de construction est découpé aux dimensions requises d'utilisation.

Ce procédé est préférentiellement, mais non exclusivement utilisé pour la fabrication de dalles alvéolées ou non, de prédalles ou de poutre-dalles de béton.

Lors de l'exposition au feu, une pellicule de sulfo-aluminate de calcium se forme au niveau de la couche 1 de protection au feu. Du fait que cette pellicule agit comme un bouclier thermique, l'interface entre la couche 1 de protection au feu et la couche 2 du matériau de construction reste à une température suffisamment basse pour éviter toute dilatation susceptible de détériorer l'adhérence desdites couches.

En fonction des nécessités et de la nature de l'exposition, la formule, les composants utilisés ainsi que l'épaisseur de la couche de protection au feu peuvent être ajustés de manière à assurer une température maximum à l'interface avec la structure compatible avec : le type de béton utilisé (classe de résistance), l'exposition retenue (ISO 834, HCM, ...), le niveau des performances requis (temps en minutes de tenue au feu), la température maximum acceptable en tout point de la structure, notamment sur les armatures et en face non exposée.

Par exemple, dans le cas d'une sollicitation de type ISO 834, pour la protection d'un béton standard et pour une couche 1 de protection au feu obtenue à partir d'une composition granuleuse comprenant un liant hydraulique à base d'anhydrite III et un granulat susceptible de libérer de l'alumine, ladite couche de protection au feu ayant une épaisseur de 10 mm et 20 mm, on obtient respectivement une température d'environ 350°C et 210°C à l'interface des deux couches 1 et 2, au bout de 120 minutes d'exposition. Ces mêmes essais réalisés selon la norme EN 1363 partie 1, montrent que l'intégrité de la couche de protection au feu est assurée jusqu'à 250 minutes et ce, malgré une épaisseur réduite. Ces propriétés permettent de garantir l'intégrité de la structure et préviennent tout phénomène d'écaillage.

De plus, le matériau constitutif de la couche 1 de protection au feu a un faible coefficient de dilatation thermique, $\alpha=10^{-6}$ K$^{-1}$, ce qui lui permet de résister efficacement à des chocs thermiques répétés sans dilatation thermique dommageable.

En se rapportant à la variante de réalisation représentée sur les figures 2A à 2C, il est également possible de fabriquer l'élément de construction objet de dispose en disposant d'abord au fond du moule 3 la couche 2 du matériau de construction (figure 2A), puis en disposant sur cette dernière suffisamment durcie la couche 1 de protection au feu (figure 2B). Les différents matériaux utilisés et les techniques de réalisation sont similaires à ceux décrits précédemment. L'élément de construction obtenu (figure 2C) présente les mêmes propriétés que celles décrites précédemment et sera par exemple utilisé dans le cas de plancher intermédiaire dans un tunnel.

Dans le cas où la couche 1 de protection au feu est formée à partir d'une composition granuleuse comprenant un liant hydraulique à base d'anhydrite III et un granulat susceptible de libérer de l'alumine, la demanderesse a pu constater que :

- une fois que la couche de protection a fait prise, le durcissement et la dureté alliés à une mécanique au jeune âge permettent de couler, voire de déposer par extrusion ou tout autre moyen convenant à l'homme du métier, jusqu'à 30 centimètres de béton sans abîmer ni altérer la dite couche de protection;
- la dureté de la couche de protection permet de garantir l'intégrité de la surface de la dite couche de protection sous le poids propre de l'élément de construction (plusieurs tonnes), même dans le cas de charges concentrées sur les appuis (cas des dalles alvéolées à la découpe des câbles de précontrainte) ;
- du fait de la dureté de la couche de protection au feu, le transport des éléments de construction sur camion plateau peut être réalisé sans abîmer ou altérer la protection incendie et cela, sans précaution particulière.
- la couche de protection n'est pas altérée par une phase de maturation en atmosphère chaude et saturée en humidité, appelée aussi cure (100 % HR-60 °C);
- il n'y a besoin d'aucune intervention en sous face de la structure pour réaliser la protection incendie : l'espace est laissé libre et propre aux autres corps d'état;

- en fonction des difficultés, des hauteurs d'intervention, de la géométrie des plateaux et si on estime à environ 100 m$^2$ à 300 m$^2$ par jour et par poseur les possibilités en terme de protection incendie rapportée (panneaux ou produits projetés), on envisage facilement le gain de temps sur chantier;
- il n'y a pas de nécessité de lissage et/ou d'enduisage avant une éventuelle mise en peinture d'où une économie de préparation de surface et un gain de temps sur chantier;
- il y a des possibilités de réduire l'enrobage des aciers et/ou les épaisseurs des structures et/ou d'augmenter les portées et/ou d'augmenter les capacités portantes.

**Revendications**

1. Procédé de fabrication d'un élément de construction ayant au moins une face résistante au feu, **se caractérisant par le fait que** ledit élément de construction est obtenu en disposant dans un moule (3) :

   • une couche (1) d'un matériau autolissant fluide ayant des propriétés d'adhérence et des propriétés anti-feu, ledit matériau étant apte à faire prise et durcir,
   • une couche (2) d'un matériau de construction fluide ou pâteux, de type mortier ou béton,

   et **par le fait que** la couche (1) ayant des propriétés anti-feu forme la face résistante au feu dudit élément de construction.

2. Procédé selon la revendication 1, dans lequel on dispose d'abord au fond du moule (3) la couche (1) de protection au feu, puis on dispose sur ladite couche de protection au feu suffisamment durcie la couche (2) du matériau de construction.

3. Procédé selon la revendication 1, dans lequel on dispose d'abord au fond du moule (3) la couche (2) du matériau de construction, puis on dispose sur ladite couche du matériau de construction suffisamment durcie la couche (1) de protection au feu.

4. Procédé selon l'une des revendications précédentes, dans lequel on forme le matériau constitutif de la couche (1) de protection au feu en mélangeant une composition granuleuse comprenant un liant hydraulique à base d'anhydrite III et un granulat susceptible de libérer de l'alumine, avec de l'eau, ledit liant hydraulique et ledit granulat étant dosés pour former, à partir de 1000°C, une peau extérieure à base de sulfo-aluminate de calcium.

5. Procédé selon la revendication 4, dans lequel on dose le liant hydraulique à base d'anhydrite III et le granulat susceptible de libérer de l'alumine pour faire réagir de 3 à 5 moles d'anhydrite III avec 2 à 4 moles d'alumine.

6. Procédé selon l'une des revendications 4 à 5, dans lequel la proportion d'eau mélangée avec la composition granuleuse est comprise entre 40 % et 80 % P/P$_{liant}$.

7. Procédé selon l'une des revendications 4 à 6, dans lequel on utilise un granulat susceptible de libérer de l'alumine choisi dans la liste des granulats suivants pris seuls ou en combinaison : bauxite calcinée, alumine tabulaire, alumine calcinée, argile réfractaire calcinée, chamotte réfractaire, perlite, , bentonite, magnésite, dolomite, laitier, corindons blanc ou brun, kerphalite, hydroxyde d'aluminium, amiante recyclée, ciment fondu alumineux, spinelle d'alumine magnésie.

8. Procédé selon l'une des revendications 4 à 6, dans lequel on utilise de la vermiculite comme granulat susceptible de libérer de l'alumine.

9. Procédé selon l'une des revendications 4 à 8, dans lequel on utilise un liant hydraulique à base d'anhydrite III préparé en :

   a) chauffant une composition pulvérulente à base de sulfate de calcium pour former de l'anhydrite III soluble métastable,
   b) appliquant une contrainte mécanique sur les particules d'anhydrite III soluble métastable de manière à stabiliser leur phase métastable.

**10.** Procédé selon la revendication 1, dans lequel on forme le matériau constitutif de la couche (1) de protection au feu en mélangeant un plâtre et/ou un ciment Portland et/ou un ciment alumineux à de la vermiculite et/ou de la perlite et de l'eau.

**11.** Élément de construction obtenu par le procédé conforme aux revendications 4 à 9 et comportant :

- une couche (1) d'un matériau formé par le mélange d'une composition granuleuse comprenant un liant hydraulique à base d'anhydrite III et un granulat susceptible de libérer de l'alumine, avec de l'eau, ledit liant hydraulique et ledit granulat étant dosés pour former, à partir de 1100°C, une peau extérieure à base de sulfoaluminate de calcium,
- une couche (2) d'un matériau de construction de type mortier ou béton.

**12.** Élément de construction selon la revendication 11, dans lequel la couche (1) de protection au feu a une épaisseur comprise entre 5 et 50 mm.

**13.** Élément de construction obtenu par le procédé conforme aux revendications 1 à 11, ledit élément étant du type dalle, dalle alvéolaire, prédalle ou poutre-dalle en béton comportant une protection au feu.

Fig.1A

Fig.1B

Fig.1C

Fig.2A

Fig.2B

Fig.2C

**EP 2 159 204 A1**

Europäisches Patentamt

European Patent Office

Office européen des brevets

**RAPPORT DE RECHERCHE EUROPEENNE**

Numéro de la demande

EP 08 16 2910

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| E | FR 2 915 701 A (GYPSMIX [CH]) 7 novembre 2008 (2008-11-07) * le document en entier * | 1-13 | INV. C04B28/16 B28B1/16 E04C2/288 C04B41/65 |
| D,X | US 6 230 409 B1 (BILLINGS PATRICIA [US] ET AL) 15 mai 2001 (2001-05-15) * colonne 3, ligne 58 - colonne 5, ligne 34 * | 1-3,10, 13 | |
| Y | | 1,4-9, 11,12 | |
| D,Y | WO 2007/000500 A (GYPSMIX SARL [CH]; DUMOULIN EDOUARD [FR]) 4 janvier 2007 (2007-01-04) * page 5, ligne 5-31 * * page 8, ligne 4-11 * * page 9; tableau 1 * | 1,4-9, 11,12 | |
| Y | DE 103 47 019 A1 (BETONWERK GODELMANN KG [DE]) 28 avril 2005 (2005-04-28) * revendications; figures * | 1,4-9, 11,12 | |

**DOMAINES TECHNIQUES RECHERCHES (IPC)**

| Catégorie | Citation | Revendication | |
|---|---|---|---|
| A | JP 11 141141 A (TOHO RAYON KK; ARISAWA SEISAKUSHO KK; KUMAGAI GUMI CO LTD) 25 mai 1999 (1999-05-25) * abrégé * | 1-13 | C04B B28B |
| A | GB 2 360 769 A (LAFARGE BRAAS TECHNICAL CT S L [GB]; LAFARGE SA [FR] LAFARGE BRAAS TEC) 3 octobre 2001 (2001-10-03) | | |
| A | FR 2 868 772 A (LY VANNA [FR]) 14 octobre 2005 (2005-10-14) | | |
| A | FR 2 804 423 A (ENERGETIC IND INTERNAT [FR]) 3 août 2001 (2001-08-03) | | |

Le présent rapport a été établi pour toutes les revendications

| Lieu de la recherche | Date d'achèvement de la recherche | Examinateur |
|---|---|---|
| La Haye | 29 janvier 2009 | Theodoridou, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

13

Europäisches
Patentamt

European
Patent Office

Office européen
des brevets

---

## REVENDICATIONS DONNANT LIEU AU PAIEMENT DE TAXES

La présente demande de brevet européen comportait lors de son dépôt les revendications dont le paiement était dû.

☐ Une partie seulement des taxes de revendication ayant été acquittée dans les délais prescrits, le présent rapport de recherche européenne a été établi pour les revendications pour lesquelles aucun paiement n'était dû ainsi que pour celles dont les taxes de revendication ont été acquittées, à savoir les revendication(s):

☐ Aucune taxe de revendication n'ayant été acquittée dans les délais prescrits, le présent rapport de recherche européenne a été établi pour les revendications pour lesquelles aucun paiement n'était dû.

---

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

☐ Toutes les nouvelles taxes de recherche ayant été acquittées dans les délais impartis, le présent rapport de recherche européenne a été établi pour toutes les revendications.

☒ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☐ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

☐ Le present rapport supplémentaire de recherche européenne a été établi pour les parties de la demande de brevet européen qui se rapportent a l'invention mentionée en premier lieu dans le revendications (Règle 164 (1) CBE)

Europäisches
Patentamt

European
Patent Office

Office européen
des brevets

**ABSENCE D'UNITÉ D'INVENTION
FEUILLE SUPPLÉMENTAIRE B**

Numéro de la demande

EP 08 16 2910

La division de la recherche estime que la présente demande de brevet européen ne satisfait pas à l'exigence
relative à l'unité d'invention et concerne plusieurs inventions ou pluralités d'inventions, à savoir :

    1. revendications: 1-9,11-13

        Procédé de fabrication d'un élément de construction en deux
        couches, dans lequel le matériau de la couche (1) comprend
        un liant hydraulique à base de l'anhydrite III et un
        granulat susceptible de libérer l'alumine
                            ---

    2. revendications: 1,10

        Procédé de fabrication d'un élément de construction en deux
        couches, dans lequel le matériau de la couche (1) comprend
        liant à base de plâtre et/ou ciment Portland et/ou ciment
        alumineux et la vermiculite et/ou la perlite
                            ---

EPO FORM P0402

**ANNEXE AU RAPPORT DE RECHERCHE EUROPEENNE
RELATIF A LA DEMANDE DE BREVET EUROPEEN NO.**

EP 08 16 2910

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-01-2009

| Document brevet cité au rapport de recherche | | Date de publication | Membre(s) de la famille de brevet(s) | | Date de publication |
|---|---|---|---|---|---|
| FR 2915701 | A | 07-11-2008 | AUCUN | | |
| US 6230409 | B1 | 15-05-2001 | US | 2002020061 A1 | 21-02-2002 |
| | | | US | 2003029131 A1 | 13-02-2003 |
| WO 2007000500 | A | 04-01-2007 | AU | 2005333840 A1 | 04-01-2007 |
| | | | CA | 2611886 A1 | 04-01-2007 |
| | | | CN | 101248024 A | 20-08-2008 |
| | | | EP | 1907336 A1 | 09-04-2008 |
| DE 10347019 | A1 | 28-04-2005 | AUCUN | | |
| JP 11141141 | A | 25-05-1999 | JP | 3841533 B2 | 01-11-2006 |
| GB 2360769 | A | 03-10-2001 | AT | 299483 T | 15-07-2005 |
| | | | AU | 3943601 A | 08-10-2001 |
| | | | BR | 0109594 A | 04-02-2003 |
| | | | CA | 2406029 A1 | 04-10-2001 |
| | | | CN | 1420854 A | 28-05-2003 |
| | | | CN | 1800079 A | 12-07-2006 |
| | | | DE | 60111934 D1 | 18-08-2005 |
| | | | DE | 60111934 T2 | 12-01-2006 |
| | | | DK | 1274664 T3 | 31-10-2005 |
| | | | EP | 1274664 A1 | 15-01-2003 |
| | | | ES | 2244592 T3 | 16-12-2005 |
| | | | GB | 2360768 A | 03-10-2001 |
| | | | WO | 0172658 A1 | 04-10-2001 |
| | | | JP | 2004508257 T | 18-03-2004 |
| | | | MX | PA02009494 A | 14-05-2004 |
| | | | PL | 357766 A1 | 26-07-2004 |
| | | | PT | 1274664 T | 30-11-2005 |
| | | | RU | 2264362 C2 | 20-11-2005 |
| | | | US | 2004035328 A1 | 26-02-2004 |
| | | | ZA | 200207765 A | 04-02-2004 |
| FR 2868772 | A | 14-10-2005 | AUCUN | | |
| FR 2804423 | A | 03-08-2001 | AUCUN | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6230409 B, BILLINGS

- WO 2007000500 A